# EUROPEAN PATENT SPECIFICATION

(11) **EP 0 677 088 B1**
(45) Date of publication and mention of the grant of the patent: **20.10.1999**
(21) Application number: 94904864.9
(22) Date of filing: 17.12.1993
(51) Int. Cl.: C09D 5/14

(54) **GEL-FREE PAINT CONTAINING CUPROUS OXIDE PLUS 2,2'-DITHIOBIS(PYRIDINE-1-OXIDE) COMPOUND**
GELFREIE FARBE ENTHALTEND KUPFEROXID PLUS 2,2'-DITHIOBIS(PYRIDIN-1-OXID)-VERBINDUNG
PEINTURE DEPOURVUE DE GEL CONTENANT DE L'OXYDE CUIVREUX ET UN COMPOSE DE 2,2'-DITHIOBIS(PYRIDINE-1-OXYDE)

(30) Priority: 04.01.1993 US 170
(43) Date of publication of application: 18.10.1995
(73) Proprietor: OLIN CORPORATION, Cheshire, CT 06410-0586 (US)
(72) Inventor: HANI, Rahim, Cheshire, CT 06410 (US); WALDRON, Craig, Waterbury, CT 06705 (US); FARMER, Douglas, A., Jr., Madison, CT 06443 (US)
(74) Representative: Nachshen, Neil Jacob
(86) International application number: US9312366
(87) International publication number: WO9416024

(56) References cited:
- US-A- 4 039 312
- US-A- 5 057 153
- US-A- 5 112 397
- US-A- 5 137 569
- US-A- 5 185 033
- US-A- 5 238 490
- PATENT ABSTRACTS OF JAPAN vol. 003, no. 100 (C-056), 24 August 1979 & JP 54 078733 A (HOKKO CHEM IND CO LTD), 23 June 1979,

## Description

The present invention relates generally to paints and paint bases, and, more specifically to a process for providing a stable, gel-free dispersion of biocidal amounts of 2,2'-dithiobis(pyridine-1-oxide), or its metal salt adducts of the formula (C₅H₄NOS)₂MYₜ or their hydrates, plus cuprous oxide biocide in paint, where M is an alkaline earth metal, Y is the anion of an organic or inorganic acid, and t is 1 or 2.

Combinations of zinc pyrithione and cuprous oxide are known to be excellent antifouling agents when formulated into paints and paint bases (i.e., the paint before pigment addition) also containing rosin, as disclosed, for example, in U.S. Patent No. 5,057,153. Unfortunately, however, such paints have now been found to thicken or gel unacceptably within a few days, at best, or a few hours, at worst, when formulated with typical commercial grades of zinc pyrithione in combination with cuprous oxide.

Heretofore, various solutions to the problem of gellation of paints containing rosin and zinc pyrithione in combination with cuprous oxide, have been suggested. Illustrative solutions have been to use rigorously purified zinc pyrithione, as disclosed in U.S. Patent No. 5,098,473, or to add amines or esterified rosin, as disclosed in U.S. Patent No. 5,112,397, or to use a metal salt of rosin, as disclosed in U.S. Patent No. 5,137,569. Since these solutions may have drawbacks such as increased cost or lack of compatibility with some paints, a new, economical solution to the problem would be highly desired by the paint manufacturing community in order to maximize flexibility in using this combination of biocides in view of its excellent biocidal activity.

JP 54078733 discloses an underwater antifouling coating compound comprising (A) 2,2'-dithio-bis-(pyridine-1-oxide), and, optionally, (B) an inorganic or organic antifouling compound, and (C) pigments, synthetic resins, solvents.

The present invention provides one solution to this problem. Although individually cuprous oxide, 2,2'-dithiobis(pyridine-1-oxide) (hereinafter also referred to as "bispyrithione"), and its metal salt adducts and their hydrates are all known biocides, the use of a combination of bispyrithione or its metal salt adducts or their hydrates plus cuprous oxide as biocides in the production of a paint which is stable against gellation during storage have not been known heretofore to the knowledge of the present inventors.

In one aspect, the present invention relates to a process for providing a gel-free paint or paint base characterized by biocidal efficacy. The process comprises adding to a paint or paint base a biocidally effective amount of bispyrithione or its metal salt adducts or their hydrates plus cuprous oxide, or a combination thereof.

The bispyrithione metal salt adducts useful in the present invention have the formula (C₅H₄NOS)₂MYₜ wherein M is an alkaline earth metal, Y is the anion of an inorganic or organic acid and t is either 1 or 2. More particularly, the adducts contain an alkaline earth metal (M) selected from the group consisting of calcium, magnesium, barium and strontium with calcium and magnesium being preferred and the anion (Y) is selected from the group consisting of halides, sulfates, nitrates, chlorates and acetates with the chlorides and sulfates being preferred. More particularly preferred are the adducts of calcium chloride (CaCl₂) or magnesium sulfate (MgSO₄). Also included in the adducts of this invention are hydrates of the aforementioned compounds, i.e., adducts including nH₂O groups where n is an integer of 0 to 10. Additionally, the adducts may contain one or more substituents on either or both pyridine ring structures such as alkyls, halogens and alkoxy groups. Reference to the adducts in the specification and claims is intended to include compounds containing such substituents. It is further noted that (C₂H₄NOS)₂ as used above and throughout the specification and claims represents bis-(2-pyridyl-1-oxide) disulfide and has the structural formula shown below:

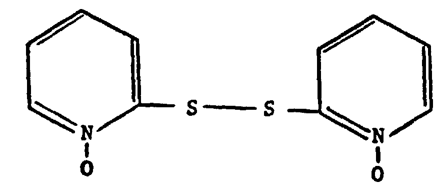

The preparation of the adducts is described in U.S. Patent No. 3,818,018.

In another aspect, the present invention relates to a paint or paint base composition characterized by enhanced biocidal efficacy and gellation resistance wherein the paint or paint base contains a biocide consisting essentially of bispyrithione or its metal salt adducts or their hydrates and cuprous oxide, or a combination thereof. The bispyrithione or its metal salt adducts or their hydrates, or combination thereof, are present in an amount of between 1% and 25% (preferably 5-25%, more preferably 10-25%), and the cuprous oxide being present in an amount of between 20% and 70%, the total amount of said bispyrithione or its metal salt adducts or their hydrates plus said cuprous oxide being between 20% and 80% or preferably 75%, based upon the total weight of the paint or paint base.

These and other aspects of the invention will become apparent upon reading the following detailed description of the invention.

It has been surprisingly found that the compositions of the present invention are storage stable and do not tend to form gels upon standing. This result is in distinct contrast to the tendency for zinc pyrithione plus cuprous oxide compositions to form gels, as illustrated by the specific examples provided hereinbelow.

Although the improved biocidal efficacy and gellation resistance advantages associated with the present invention are expected to provide advantages when used in a wide variety of paints, including indoor and outdoor household paints, industrial and commercial paints, particularly advantageous results are obtained when the process and composition of the present invention are utilized in conjunction with marine paints for use, for example, on ship's hulls. In addition, the composition and process of the present invention provides highly desirable results in the context of exterior paints of both the latex and alkyd types.

Typically, a paint composition will contain a resin, an organic solvent (such as xylene or methylisobutylketone), a pigment, and various optional additives such as thickening agent(s), wetting agents, and the like, as is well-known in the art. The resin is preferably selected from the group consisting of vinyl, alkyd, epoxy, acrylic, polyurethane and polyester resins, and combinations thereof. The resin is preferably employed in an amount of between 20% and 80% based upon the weight of the paint or paint base.

In addition, the paint composition of the present invention optionally additionally contains optional additives which have a favorable influence on the viscosity, the wetting power and the dispersibility, as well as on the stability to freezing and electrolytes and on the foaming properties. The total amount of optional additives is preferably no greater than 20% by weight, more preferably between 1% and 5% by weight, based upon the total weight of the paint composition.

Illustrative thickening agents include cellulose derivatives, for example methyl, hydroxyethyl, hydroxypropyl and carboxymethyl cellulose, poly(vinyl alcohol), poly (vinylpyrolidone), poly(ethylene-glycol), salts of poly(acrylic acid) and salts of acrylic acid/acrylamide copolymers.

Suitable wetting and dispersing agents include sodium polyphosphate, aryl or alkyl phosphates, salts of low-molecular-weight poly(acrylic acid), salts of poly(ethane-sulfonic acid), salts of poly (vinyl-phosphonic acid), salts of poly(maleic acid) and salts of copolymers of maleic acid with ethylene, 1-olefins with 3 to 18 carbon atoms and/or styrene.

In order to increase the stability to freezing and electrolytes there may be added to the paint composition various monomer 1,2-diols, for example glycol, propylene-glycol-(1,2), and butylene-glycol(1,2) or polymers thereof, or ethoxylated compounds, for example reaction products of ethylene oxide with long- chain alkanols, amines, carboxylic acids, carboxylic acid amides, alkyd phenols, poly(propylene-glycol) or poly(butylene-glycol).

The minimum temperature of film formation (white point) of the paint composition may be reduced by adding solvents, such as ethylene-glycol, butyl-glycol, ethyl- glycol acetate, ethyl-diglycol acetate, butyl-diglycol acetate, benzene or alkylated aromatic hydrocarbons. As defoaming agents there are suitable for example poly(propylene-glycol) and polysiloxanes.

The paint composition of the present invention may be used as a paint for natural or synthetic materials, for example wood, paper, metals, textiles and plastics. It is particularly suitable as an outdoor paint, and is excellent for use as a marine paint.

If a marine paint is being fabricated, the paint preferably contains a swelling agent to cause the paint to gradually "slough off" in its marine environment, thereby causing renewed biocidal efficacy of newly exposed biocide (i.e., the copper pyrithione or pyrithione disulfide plus the cuprous oxide) at the surface of the paint in contact with the water medium of the marine environment. Illustrative swelling agents are naturally-occurring or synthetic clays, such as kaolin, montomorillonite (bentonite), clay mica (muscovite), and chlorite (hectonite), and the like. In addition to clays, other swelling agents, including natural or synthetic polymers, such as that commercially available as POLYMERGEL, have been found to be useful in the compositions of the present invention to provide the desired ablasive "sloughing off" effect. Swelling agents can be used singly or in combination. The total amount of optional additives is preferably no greater than 20% by weight, more preferably between 1% and 5% by weight, based upon the total weight of the paint composition.

The invention is further illustrated by the following Examples. Unless otherwise stated, the "parts" and "%" are "parts by weight" and "percent by weight", respectively based upon the weight of the paint or paint base.

While the invention has been described above with references to specific embodiments thereof, it is apparent that many changes, modifications and variations can be made without departing from the inventive concept disclosed herein. Accordingly, it is intended to embrace all such changes, modifications and variations that fall within the spirit and broad scope of the appended claims.

### Comparative Example A

### Demonstration of Gellation Results in a Paint containing Cuprous Oxide Plus Zinc Pyrithione

A paint was prepared using the following formulation:

The solvent mixture used was a 1:2:1 mixture of xylene MIBK and carbitol acetate (called mixed solvent).

The zinc pyrithione used was standard commercial grade and assayed 97.8% pure by iodometric titration.

| Material | Parts | % |
|---|---|---|
| | | |
| VAGH resin (1) | 9.3 | 2.8 |
| DISPERBYK 163 (2) | 5.1 | 1.5 |
| Tributyl Phosphate | 6.45 | 2.0 |
| Cuprous Oxide | 136.5 | 41.4 |
| TITANOX (3) | 7.5 | 2.3 |
| Zinc pyrithione powder | 25.5 | 7.7 |
| Wood Rosin | 6.3 | 1.9 |
| Solvent Mixture | 133.0 | 40.0 |

| | | |
|---|---|---|
| 1) vinyl chloride-vinyl acetate-vinyl alcohol terpolymer, a product of Union Carbide Corporation. | | |
| 2) a high molecular weight block copolymer, a product of BYK-Chemie. | | |
| (3) titanium dioxide, a product of DuPont Company. | | |

The procedure employed for preparing the paint was as follows:
(1) A one pint paint can was charged with 41.93 g of a 22.2% VAGH resin solution in a 2:1 mixture by volume of MIBK and xylene.
(2) A mixture of 5.1 g Disperbyk 163 and 5.1 g mixed solvent was added.
(3) Tributyl phosphate was added to the paint can and mixed with a high speed disperser at 1000 RPM for 10 minutes.
(4) The cuprous oxide, zinc pyrithione, titanox, and 10.8 g carbitol acetate were added to the paint can and mixing was continued at 7000 RPM for 1 hr.
(5) The mixing speed was reduced to 2500 RPM and 35 g of mixed solvent was added.
(6) Once the temperature dropped from 45°C to below 35°C, a solution of 6.3 g of wood rosin in 50 g of mixed solvent was added to the can and the mixture was mixed for 1.0 hr. at 2500 RPM.

The paint formulation made according to this procedure was of suitable viscosity for application by brush immediately after preparation, but thickened to an unpourable paste after approximately 6 hours.

### Example 1

### Demonstration of Stable Paint Containing Cuprous Oxide and Bispyrithione Magnesium Sulfate Hydrate Adduct

A paint was prepared using the following formulation:

| Material | Parts | % |
|---|---|---|
| | | |
| VAGH Resin (22%) | 3.90 | 2.85 |
| Disperbyk 163 | 2.70 | 1.97 |
| Cuprous Oxide | 75.00 | 54.78 |
| Magnesium Sulfate Hydrate Adduct of Bispyrithione | 6.85 | 5.00 |
| Tricresyl Phosphate | 3.60 | 2.63 |
| Wood Rosin WW | 6.85 | 5.00 |
| Solvent Mixture *60% MIBK/40% XYLENE | 38.00 | 27.76 |
| TOTAL | 136.90 | 100.00 |

The Procedure was the same as the above example. The formulation remained gel-free, and continues to remain gel-free, after one month of storage.

## Claims

1. A paint or paint base composition characterized by enhanced biocidal efficacy and gellation resistance wherein the paint or paint base contains a biocide consisting essentially of cuprous oxide and 2,2'-dithiobis(pyridine-1-oxide) or a metal salt adduct thereof having the empirical formula (C₅H₄NOS)₂MYₜ, or a hydrate of said metal salt adduct, wherein M is an alkaline earth metal selected from the group consisting of calcium, magnesium, barium and strontium, Y is an anion selected from the group consisting of halides, sulfates, nitrates, chlorates and acetates and t is either 1 or 2, said 2,2'-dithiobis(pyridine-1-oxide) or a metal salt adduct thereof or a hydrate of said metal salt adduct is present in an amount of between 1% and 25%, and said cuprous oxide is present in an amount of between 20% and 70%, the total amount of said 2,2'-dithiobis(pyridine-1-oxide) or a metal salt adduct thereof or a hydrate of said metal salt adduct plus said cuprous oxide being between 20% and 80%, based upon the total weight of the paint or paint base.

2. The paint or paint base of claim 1 wherein the formula is selected from the group consisting of (C₅H₄NOS)₂CaCl₂, (C₅H₄NOS)₂MgSO₄ • 3H₂O, (C₅H₄NOS)₂SrCl₂, (C₅H₄NOS)₂ SrBr₂, (C₅H₄NOS)₂BaBr₂, (C₅H₄NOS)₂ Ca(NO₃)₂ and (C₅H₄NOS)₂Ba(ClO₃)₂ • 18H₂O.

3. The paint or paint base of any preceding claim wherein said paint or paint base additionally contains a resin selected from the group consisting of vinyl, alkyl, epoxy, acrylic, polyurethane and polyester resins, and combinations thereof.

4. A process for providing a gellation-inhibited paint or paint base containing 2,2'-dithiobis(pyridine-1-oxide) or a metal salt adduct thereof or a hydrate of said metal salt adduct and cuprous oxide characterized by the step of adding said 2,2'-dithiobis(pyridine-1-oxide) or a metal salt adduct thereof or a hydrate of said metal salt adduct and also adding cuprous oxide to a paint or paint base to provide a paint or paint base characterized by enhanced biocidal efficacy and resistance to gellation, said 2,2'-dithiobis(pyridine-1-oxide) or a metal salt adduct thereof or a hydrate of said metal salt adduct being present in an amount of between 1% and 25%, and said cuprous oxide being present in an amount of between 20% and 70%, the total amount of said 2,2'-dithiobis(pyridine-1-oxide) or a metal salt adduct thereof or a hydrate of said metal salt adduct plus said cuprous oxide being between 20% and 80% based upon the total weight of the paint or paint base, said 2,2'-dithiobis(pyridine-1-oxide) has the empirical formula (C₅H₄NOS)₂MYₜ wherein M is an alkaline earth metal selected from the group consisting of calcium, magnesium, barium and strontium, Y is an anion selected from the group consisting of halides, sulfates, nitrates, chlorates and acetates and t is either 1 or 2.

5. The process of claim 4 wherein the formula is selected from the group consisting of (C₅H₄NOS)₂CaCl₂, (C₅H₄NOS)₂MgSO₄ • 3H₂O, (C₅H₄NOS)₂SrCl₂, (C₅H₄NOS)₂ SrBr₂, (C₅H₄NOS)₂BaBr₂, (C₅H₄NOS)₂ Ca(NO₃)₂ and (C₅H₄NOS)₂Ba(ClO₃)₂ • 18H₂O.

6. The process of claim 4 or 5 wherein the total amount of 2,2'-dithiobis(pyridine-1-oxide) or a metal salt adduct thereof or a hydrate of said metal salt adduct plus said cuprous oxide is present in an amount of between about 20% and about 75% based upon the total weight of the paint or paint base composition.

7. The process of any one of claims 4-6 wherein said paint or paint base additionally contains a resin selected from the group consisting of vinyl, alkyl, epoxy, acrylic, polyurethane and polyester resins, and combinations thereof.

8. The process of any one of claims 4-7 wherein said paint or paint base additionally contains a swelling agent selected from the group consisting of natural and synthetic clay and natural and synthetic polymer swelling agents.

## Patentansprüche

1. Anstrichmittel- oder Anstrichmittelgrundstoff-Zusammensetzung, gekennzeichnet durch erhöhte biozide Wirksamkeit und Beständigkeit gegen Gelbildung, wobei die Anstrichmittel- oder Anstrichmittelgrundstoff-Zusammensetzung ein Biozid enthält, das im wesentlichen besteht aus Kupfer(I)oxid und 2,2'-Dithiobis(pyridin-1-oxid) oder einem Metallsalz-Addukt davon mit der Summenformel (C₅H₄NOS)₂MYₜ, oder einem Hydrat des Metallsalz-Addukts, worin M ein Erdalkalimetall ist, das ausgewählt ist aus der Gruppe, die besteht aus Calcium, Magnesium, Barium und Strontium, Y an Anion ist, das ausgewählt ist aus der Gruppe, die besteht aus Halogeniden, Sulfaten, Nitraten, Chloraten und Acetaten, und t 1 oder 2 ist, wobei das 2,2'-Dithiobis(pyridin-1-oxid) oder ein Metallsalz-Addukt davon oder ein Hydrat des Metallsalz-Addukts in einer Menge von zwischen 1% und 25% anwesend ist, und wobei das Kupfer(I)oxid in einer Menge von zwischen 20% und 70% anwesend ist, wobei die Gesamtmenge des 2,2'-Dithiobis(pyridin-1-oxid) oder eines Metallsalz-Addukts davon oder eines Hydrats des Metallsalz-Addukts plus dem Kupfer(I)oxid zwischen 20% und 80% liegt, auf der Basis des Gesamtgewichts des Anstrichmittels oder des Anstrichmittelgrundstoffs.

2. Anstrichmittel oder Anstrichmittelgrundstoff nach Anspruch 1, bei dem die Formel ausgewählt ist aus der Gruppe, die besteht aus (C₅H₄NOS)₂CaCl₂, (C₅H₄NOS)₂MgSO₄ • 3H₂O, (C₅H₄NOS)₂SrCl₂, (C₅H₄NOS)₂SrBr₂, (C₅H₄NOS)₂BaBr₂, (C₅H₄NOS)₂Ca(NO₃)₂ und (C₅H₄NOS)₂Ba(ClO₃)₂ • 18H₂O.

3. Anstrichmittel oder Anstrichmittelgrundstoff nach irgendeinem vorangehenden Anspruch, wobei das Anstrichmittel oder der Anstrichmittelgrundstoff zusätzlich ein Harz enthält, das ausgewählt ist aus der Gruppe, die besteht aus Vinyl-, Alkyl-, Epoxy-, Acryl-, Polyurethan- und Polyester-Harzen und Kombinationen davon.

4. Verfahren zum Bereitstellen eines gelierungsgehemmten Anstrichmittels oder eines gelierungsgehemmten Anstrichmittelgrundstoffs, das oder der 2,2'-Dithiobis(pyridin-1-oxid) oder ein Metallsalz-Addukt davon oder ein Hydrat des Metallsalz-Addukts und Kupfer(I)oxid enthält, gekennzeichnet durch den Schritt des Zugebens des 2,2'-Dithiobis(pyridin-1-oxid) oder eines Metallsalz-Addukts davon oder eines Hydrats des Metallsalz-Addukts, und des ebenfalls Zugebens von Kupfer(I)oxid zu einem Anstrichmittel oder einem Anstrichmittelgrundstoff, um ein Anstrichmittel oder einen Anstrichmittelgrundstoff bereitzustellen, das oder der gekennzeichnet ist durch erhöhte biozide Wirksamkeit und Beständigkeit gegen Gelbildung, wobei das 2,2'-Dithiobis(pyridin-1-oxid) oder ein Metallsalz-Addukt davon oder ein Hydrat des Metallsalz-Addukts in einer Menge von zwischen 1% und 25% anwesend ist, und das Kupfer(I)oxid in einer Menge von zwischen 20% und 70% anwesend ist, wobei die Gesamtmenge des 2,2'-Dithiobis(pyridin-1-oxid) oder eines Metallsalz-Addukts davon oder eines Hydrats des Metallsalz-Addukts plus dem Kupfer(I)oxid zwischen 20% und 80% auf der Basis des Gesamtgewichts des Anstrichmittels oder des Anstrichmittelgrundstoffs liegt, wobei das 2,2'-Dithiobis(pyridin-1-oxid) die Summenformel (C₅H₄NOS)₂MYₜ hat, worin M ein Erdalkalimetall ist, das ausgewählt ist aus der Gruppe, die besteht aus Calcium, Magnesium, Barium und Strontium, Y ein Anion ist, das ausgewählt ist aus der Gruppe, die besteht aus Halogeniden, Sulfaten, Nitraten, Chloraten und Acetaten, und t entweder 1 oder 2 ist.

5. Verfahren nach Anspruch 4, bei dem die Formel ausgewählt ist aus der Gruppe, die besteht aus (C₅H₄NOS)₂CaCl₂, (C₅H₄NOS)₂MgSO₄ • 3H₂O, (C₅H₄NOS)₂SrCl₂, (C₅H₄NOS)₂SrBr₂, (C₅H₄NOS)₂BaBr₂, (C₅H₄NOS)₂Ca(NO₃)₂ und (C₅H₄NOS)₂Ba(ClO₃)₂ • 18H₂O.

6. Verfahren nach Anspruch 4 oder 5, bei dem die Gesamtmenge an 2,2'-Dithiobis(pyridin-1-oxid) oder eines Metallsalz-Addukts davon oder eines Hydrats des Metallsalz-Addukts plus dem Kupfer(I)oxid in einer Menge von zwischen etwa 20% und etwa 75% auf der Basis des Gesamtgewichts der Anstrichmittel- oder Anstrichmittelgrundstoff-Zusammensetzung anwesend ist.

7. Verfahren nach einem der Ansprüche 4 bis 6, bei dem das Anstrichmittel oder der Anstrichmittelgrundstoff zusätzlich ein Harz enthält, das ausgewählt ist aus der Gruppe, die besteht aus Vinyl-, Alkyl-, Epoxy-, Acryl-, Polyurethan- und Polyester-Harzen und Kombinationen davon.

8. Verfahren nach einem der Ansprüche 4 bis 7, bei dem das Anstrichmittel oder der Anstrichmittelgrundstoff zusätzlich ein Quellmittel enthält, das ausgewählt ist aus der Gruppe, die besteht aus natürlichem und synthetischem Ton und natürlichen und synthetischen Polymer-Quellmitteln.

## Revendications

1. Composition de peinture ou de base de peinture, caractérisée par une efficacité biocide et une résistance à la gélification améliorées dans laquelle la peinture ou la base de peinture contient un biocide consistant essentiellement en oxyde cuivreux et en 2,2'-dithiobis(pyridine-1-oxyde) ou un composé d'addition de sel métallique de celui-ci ayant la formule empirique (C₅H₄NOS)₂ MYₜ, ou un hydrate dudit composé d'addition de sel métallique, dans laquelle M est un métal alcalino-terreux sélectionné dans le groupe constitué par le calcium, le magnésium, le baryum et le strontium, Y est un anion sélectionné dans le groupe constitué par les halogénures, les sulfates, les nitrates, les chlorates et les acétates, et t vaut 1 ou 2, ledit 2,2'-dithiobis(pyridine-1-oxyde) ou un composé d'addition de sel métallique de celui-ci ou un hydrate dudit composé d'addition de sel métallique étant présent en une quantité entre 1% et 25%, et ledit oxyde cuivreux étant présent en une quantité entre 20% et 70%, la quantité totale dudit 2,2'-dithiobis(pyridine-1-oxyde) ou un composé d'addition de sel métallique de celui-ci ou un hydrate dudit composé d'addition de sel métallique plus ledit oxyde cuivreux étant entre 20% et 80%, rapportée au poids total de la peinture ou de la base de peinture.

2. Peinture ou base de peinture selon la revendication 1 dans laquelle la formule est sélectionnée dans le groupe constitué par (C₅H₄NOS)₂CaCl₂, (C₅H₄NOS)₂MgSO₄ • 3H₂O, (C₅H₄NOS)₂SrCl₂, (C₅H₄NOS)₂SrBr₂, (C₅H₄NOS)₂BaBr₂, (C₅H₄NOS)₂Ca(NO₃)₂ et (C₅H₄NOS)₂Ba(ClO₃)₂ • 18H₂O.

3. Peinture ou base de peinture selon l'une quelconque des revendications précédentes, caractérisée en ce que ladite peinture ou base de peinture contient en outre une résine sélectionnée dans le groupe constitué par les résines vinyle, alkyle, époxy, acrylique, polyuréthane et polyester, et les combinaisons de celles-ci.

4. Procédé pour fournir une peinture ou une base de peinture inhibée du point de vue gélification contenant le 2,2'-dithiobis(pyridine-1-oxyde) ou un composé d'addition de sel métallique de celui-ci ou un hydrate dudit composé d'addition de sel métallique et de l'oxyde cuivreux, caractérisé en ce qu'on effectue l'étape d'addition dudit 2,2'-dithiobis(pyridine-1-oxyde) ou un composé d'addition de sel métallique de celui-ci, ou un hydrate dudit composé d'addition de sel métallique et aussi en ajoutant de l'oxyde cuivreux à une peinture ou une base de peinture pour fournir une peinture ou une base de peinture caractérisée par une efficacité biocide et une résistance à la gélification améliorées, ledit 2,2'-dithiobis(pyridine-1-oxyde) ou un composé d'addition de sel métallique de celui- ci ou un hydrate dudit composé d'addition de sel métallique étant présent en une quantité entre 1% et 25%, et ledit oxyde cuivreux étant présent en une quantité entre 20% et 70%, la quantité totale dudit 2,2'-dithiobis(pyridine-1-oxyde) ou un composé d'addition de sel métallique de celui-ci ou un hydrate dudit composé d'addition de sel métallique plus ledit oxyde cuivreux étant entre 20% et 80% rapportée au poids total de la peinture ou de la base de peinture, ledit 2,2'-dithiobis(pyridine-1-oxyde) ayant la formule empirique (C₅H₄NOS)₂ MYₜ dans laquelle M est un métal alcalino-terreux sélectionné dans le groupe constitué par le calcium, le magnésium, le baryum et le strontium, Y est un anion sélectionné dans le groupe constitué par les halogénures, les sulfates, les nitrates, les chlorates et les acétates, et t vaut 1 ou 2.

5. Procédé selon la revendication 4, dans lequel la formule est sélectionnée dans le groupe constitué par (C₅H₄NOS)₂CaCl₂, (C₅H₄NOS)₂MgSO₄ • 3H₂O, (C₅H₄NOS)₂SrCl₂, (C₅H₄NOS)₂SrBr₂, (C₅H₄NOS)₂BaBr₂, (C₅H₄NOS)₂Ca(NO₃)₂ et (C₅H₄NOS)₂Ba(ClO₃)₂ • 18H₂O.

6. Procédé selon la revendication 4 ou 5, dans lequel la quantité totale du 2,2'-dithiobis(pyridine-1-oxyde) ou un composé d'addition de sel métallique de celui-ci ou un hydrate dudit composé d'addition de sel métallique plus ledit oxyde cuivreux est présente en une quantité entre environ 20% et environ 75% rapportée au poids total de la composition de peinture ou de base de peinture.

7. Procédé selon l'une quelconque des revendications 4 à 6, dans lequel ladite peinture ou base de peinture contient en outre une résine sélectionnée dans le groupe constitué par les résines vinyle, alkyle, époxy, acrylique, polyuréthane et polyester, et les combinaisons de celles-ci.

8. Procédé selon l'une quelconque des revendications 4 à 7, dans lequel ladite peinture ou base de peinture contient en outre un agent de gonflement sélectionné dans le groupe constitué par une argile naturelle et synthétique et des agents de gonflement polymères naturels ou synthétiques.
